# EUROPEAN PATENT APPLICATION

(11) **EP 3 006 257 A1**
(43) Date of publication of application: **13.04.2016**
(21) Application number: 15188994.6
(22) Date of filing: 08.10.2015
(51) Int. Cl.: B60L 11/18, B60L 15/02, H02P 21/00, H02P 6/00

(54) **CONTROL METHOD FOR CHARGER APPARATUS FOR AN ELECTRIC VEHICLE**

(30) Priority: 08.10.2014 GB 201417798
(71) Applicant: Nissan Motor Manufacturing (UK) Limited, Cranfield, Bedfordshire MK43 0DB (GB)
(72) Inventor: Urquhart, Iain, Bedfordshire, MK43 0DB (GB); Greenough, Jim, Bedfordshire, MK43 0DB (GB); Zhu, Zi-Qiang, Sheffield, S1 3JD (GB)

(57) **Abstract**

A method of controlling an electrical system for a grid-enabled vehicle, the system comprising: a bi-directional DC energy source; an electric machine including a rotor, a stator, a first winding and a second winding, wherein the stator carries the first winding; a first control circuit connected to the first winding and including an input configured to be coupled to the grid; and a second control circuit through which the second winding is connected to the bi-directional DC energy source. The method comprises: coupling the first control circuit to the grid; operating the first control circuit according to a field-oriented current space vector method so as to convert grid-supplied electrical energy into an alternating voltage waveform, comprising periodically switching a current vector in a d-q reference frame between diametrically opposed first and second vector points, the current vector being disposed at an angle relative to the d-axis to define a d-axis component value and a q-axis component value; and charging the bi-directional DC energy source using an induced alternating voltage waveform in the second winding arising through magnetic coupling between the first and second windings.

## Description

### Field of the invention

The invention relates to a control method for electric apparatus that combines the functionality of an electric drive and a battery charger. Such a method and apparatus is suitable for use in electric vehicle applications.

### Background of the invention

Electrically driven passenger vehicles are gaining market share against conventional ICE-based passenger vehicles. However, there are several factors that limit the acceptance of electric vehicles by the public at large, for instance: the limited range of such vehicles and the range anxiety it induces in the consumer; consumer scepticism about the true environmental benefit of electric vehicles; availability of charging stations and speed of charging; and the high purchase-cost of such vehicles, to name a few examples.

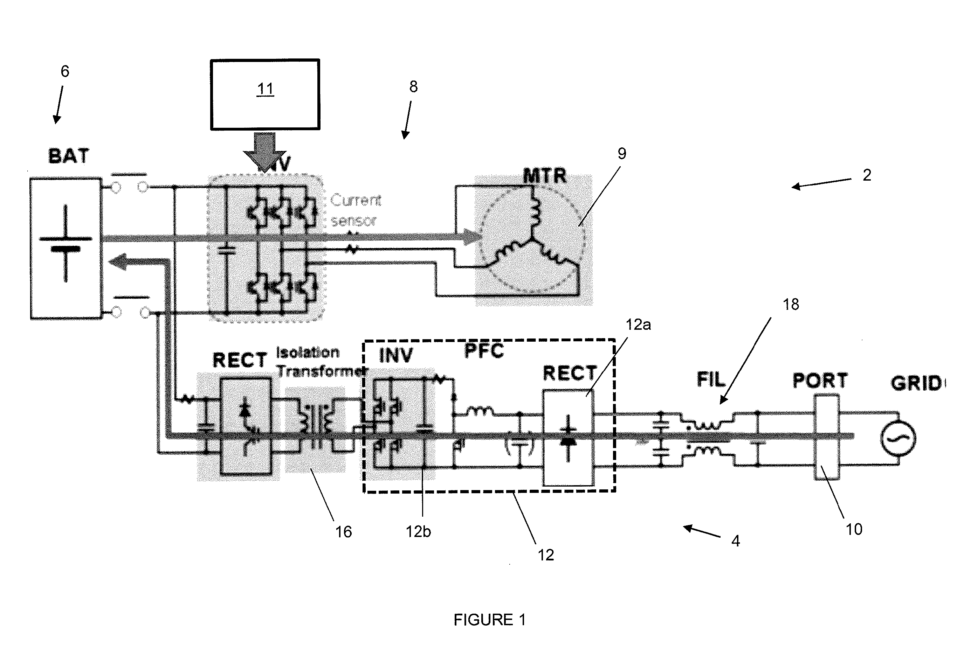

The high purchase-cost of electric vehicles is an important factor that limits large scale take-up and this cost is driven in large part by the complexity of the drive system. Consider a typical plug-in electric vehicle (PEV) or 'grid-enabled vehicle', as is shown schematically by way of example in Figure 1. As can be seen, the PEV shown here includes a traction drive system 2 and a separate charging system 4. It will be appreciated that other vehicle sub-systems aren't shown here for brevity.

In overview, the traction drive system 2 includes a high power battery pack 6, an electronic drive module 8 in the form of a DC/AC inverter, and an AC electric motor 9 - typically AC driven motors are used in EV applications. The battery pack supplies DC power to the inverter 8 which switches the supplied power under the control of inverter control means 12 into a suitable 3-phase AC power supply for the motor 9.

The charging system 4 includes a grid power input port 10, a PFC (power factor correction) module 12, a transformer 14 and a rectifier module 16. When in a charging mode, the grid input power port 10 receives AC input power from the electrical grid which is then routed through a suitable filter 18 to the PFC module 12. As is known, the PFC module 12 functions to control the input power factor from the grid at unity and here includes an AC/DC rectifier 12a and a DC/AC inverter 12b in series. The output of the PFC module 12 feeds into the transformer 14 which supplies the rectifier module 16. The rectifier module 16 in turn converts the AC power input from the transformer 14 into a suitable voltage supply for the battery pack for the period of the charging cycle. Thus, the inverter 12b, which has an H-bridge topology, the transformer 14 and the rectifier 16 function as a DC-DC converter, whereby the inverter 12b is controlled by a battery controller (not shown) to generate a required charging voltage which is then switched across the transformer 14 and is then rectified back into DC by the rectifier 16.

The transformer 14 is an isolation transformer of a kind that will be familiar to the skilled reader, and is included to provide galvanic isolation (i.e. to eliminate direct electrical conduction paths) between the grid supply and any components that are connected to the vehicle chassis, such as the battery pack. This is a safety feature, to ensure that a user is not exposed to grid voltage in the case of a fault.

From the above brief overview of the typical components one might find in an electric vehicle, it is apparent that there are power electronic components that are common to the drive system 2 and the battery charging system 4. One approach taken to reduce the mass, complexity and cost of EV drive systems is to integrate the charging system and the electric motor to achieve a reduction in power electronic components, and various arrangements have been proposed for doing so.

One such arrangement has been proposed in WO 2013/182211 to Volvo, in which the electric motor is modified such that its stator carries two sets of windings where conventionally a single set of windings would be found.

In this arrangement, in charging mode a rotor carrying a set of permanent magnets is driven by a first set of windings that is connected to the grid. The movement of the rotor induces a current in the second set of windings, which is used to charge a vehicle battery.

The two sets of windings are electrically isolated from one another, thereby providing galvanic isolation between the grid supply and the battery, and so dispensing with the need for a separate isolation transformer. Furthermore, the respective drive circuits of each set of windings can be operated in reverse to provide the same functionality as the inverter and the rectifier of the charging system 4 of Figure 1, and so no additional components are required in this respect.

Although this arrangement provides a level of integration between the traction drive system and the charging system, as rotor movement is required to induce a current in the battery-side windings, undesirable noise and vibration are inevitably generated during charging.

It is against this background that the present invention has been devised.

### Summary of the invention

In a first aspect of the invention, there is provided a method of controlling an electrical system for a grid-enabled vehicle. The system comprises a bi-directional DC energy source, an electric machine including a rotor, a stator, a first winding and a second winding. The stator carries the first winding. The system further comprises a first control circuit connected to the first winding and including an input configured to be coupled to the grid, and a second control circuit through which the second winding is connected to the bi-directional DC energy source.

The method comprises coupling the first control circuit to the grid, and operating the first control circuit according to a field-oriented current space vector method so as to convert grid-supplied electrical energy into an alternating voltage waveform. Said operation comprises periodically switching a current vector in a d-q reference frame between diametrically opposed first and second vector points, the current vector being disposed at an angle relative to the d-axis to define a d-axis component value and a q-axis component value. The bi-directional DC energy source is charged using an induced alternating voltage waveform in the second winding arising through magnetic coupling between the first and second windings.

By switching between two diametrically opposed points within the d-q reference frame, the control method beneficially avoids creating a continuous torque on the rotor. This means that the rotor remains stationary while the electrical system operates in a charging mode to charge the bi-directional DC energy source, which may be a battery for example. This avoids generation of unwanted noise and vibration during charging.

The method may comprise setting the current vector angle to 90° such that the current vector is parallel with the q-axis for both vector points. This beneficially maximises inductance between the first and second windings, ensuring a maximum level of energy is transferred to the bi-directional DC energy source from the grid.

Alternatively, the current vector angle may be set to 0° such that the current vector is parallel with the d-axis for both vector points. Advantageously, this approach minimises the torque created by the current vector.

In a further alternative, the method may comprise setting the current vector angle to a value between 0°and 90° such that both the d-axis component and the q-axis component are non-zero for both vector points. This approach enables a compromise between inductance and torque to enable the method to be optimised for the physical characteristics of the electrical system.

In any of these approaches, a midpoint defined between the first and second vector points may coincide with the origin of the d-q reference frame. Alternatively, the midpoint may be offset from the origin of the d-q reference frame, in which case it may be centred on the d-axis, on the q-axis, or on neither the d-axis nor the q-axis.

The method may comprise switching the current vector between the first and second vector points according to a square-wave profile. This beneficially ensures that the signal is balanced such that the net effect of the current vector on the rotor is minimised. In this embodiment, the square wave may have a frequency in the range of 5 kHz to 15 kHz.

The current vector angle may be determined such that the relative magnitudes of the d-axis component value and the q-axis component value provide a desired balance between rotor vibration and inductance between the first and second windings.

Conveniently, the stator may carry the second winding, in which case the first and second windings may be paired to form dual-layer windings. The first and second windings are preferably multi-phase.

The second control circuit may be arranged to convert AC electrical signals supplied by the second winding into a DC input for the bi-directional DC energy source. This entails operating the second control circuit in reverse, therefore imbuing it with dual functionality. This offers the benefit that additional components are not required to supply a DC input for the bi-directional DC energy source.

### Brief description of the drawings

For a more detailed understanding of the invention, it will now be described by way of example with reference to the following drawings in which:
Figure 1 is a schematic view of a known vehicle system including a motor drive subsystem and a battery charging subsystem;
Figure 2 is a schematic view of a vehicle system that integrates motor drive and battery charging functions;
Figure 3 is a flow diagram illustrating a typical process for implementing field-oriented vector space control in an electric motor;
Figure 4 is a graphical representation of an implementation of a field-oriented vector space control method according to a first embodiment of the invention;
Figure 5 is a graphical representation of a variation of the embodiment of the control method of Figure 3;
Figure 6 is a graphical representation of an implementation of a field-oriented vector space control method according to a second embodiment of the invention; and
Figure 7 is a graphical representation of an implementation of a field-oriented vector space control method according to a third embodiment of the invention.

### Detailed description of the embodiments

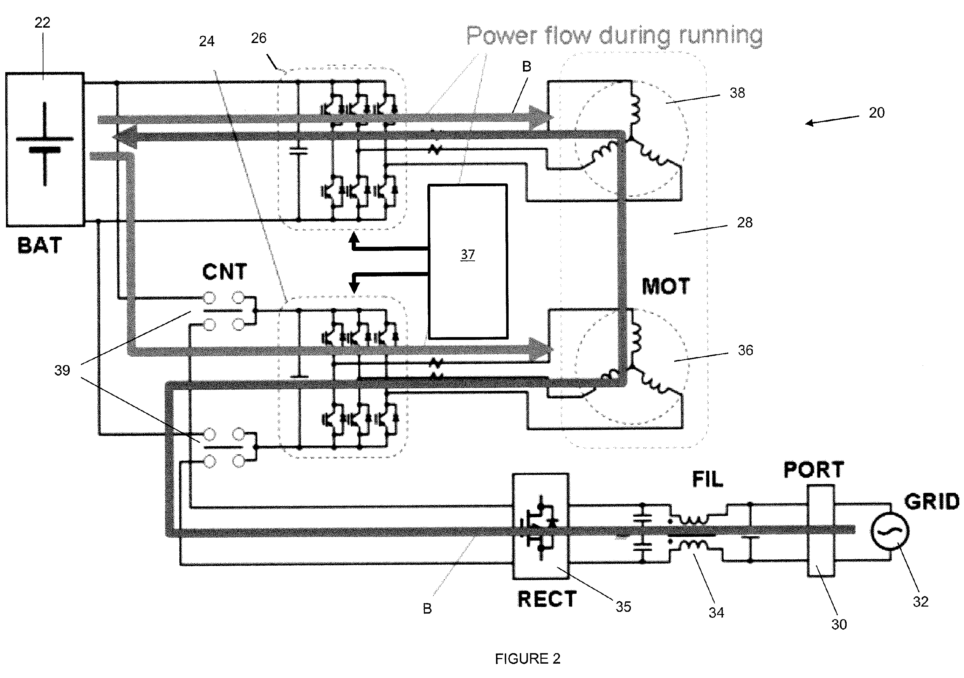

Figure 2 illustrates schematically an on-board electrical system 20 of a grid-enabled vehicle that integrates vehicle traction and also the functionality to charge the battery of the vehicle.

In overview, the electrical system 20 comprises a bi-directional DC power source or 'battery' 22, a first power electronics module 24, a second power electronics module 26, an electric machine 28, and an electric grid input port 30.

The grid input port 30 is connectable to a power supply plug of a suitable grid power source 32 which may be a single-phase AC voltage source or a three-phase AC voltage source. The port 30 provides the appropriate physical form factor for connecting to a plug provided at a charging point, and such an interface is known generally in the art.

The port 30 links to the first power electronics module 24 through a charge input filter 34 and a rectifier 35. The charge input filter 34 comprises choke conductors to filter out line noise and interference from the electrical system 20 back into the grid during a charging period. The rectifier 35 comprises suitable electrical switches such as a full-wave bridge arrangement that rectifies the input AC grid power to provide a DC voltage to the first power electronics module 24.

The electric machine 28 is shown schematically in Figure 2; its specific structural configuration is not important for the purposes of the present invention, and could take various forms. For now, however, it should be noted that the electric machine 28 includes a first stator field winding/coil 36 and a second stator field winding/coil 38 that are arranged in the stator so as to be magnetically coupled but galvanically isolated. By virtue of this arrangement the electrical system 20 may be run in two modes: a drive mode and a charging mode. In the arrangement shown in Figure 2, the first and second windings 36, 38 are arranged for a three-phase power input. Electrical contacts 39 are provided to switch power supply to the first power electronics module 24 between the battery 22, during a driving mode, and the rectifier 35 during the charging mode.

In the drive mode, as indicated by the arrows labelled 'A' in Figure 2, power is supplied from the battery 22 to the electric machine 28 through both the first power electronics module 24 and the second power electronics module 26 which energise the first and second field windings 36, 38 respectively. Here, therefore, it will be appreciated that both the first and second power electronic modules 24, 26 are driven as inverters to convert the DC power supplied from the battery 22 to AC power for the electric machine 28. The first and second field windings 36, 38 thus act together, in synchrony, to generate a synchronised rotating electromagnetic field. This rotating flux field couples to flux generated by permanent magnets disposed around a rotor of the electric machine 28, which effects movement of the rotor and so causes the electric machine 28 to act as a motor.

In the charge mode, as indicated by the arrow labelled 'B' in Figure 2, AC power supplied by the grid input port 30 is converted to DC by the rectifier 35 and then is converted back into AC by the first power electronic module 24, from where it is supplied to the first field winding 36. The magnetic coupling between the first field winding 36 and the second field winding 38 induces an alternating magnetic field in the second field winding 38 which delivers energy to the second power electronic module 26. The second power electronic module 26 is driven as an active rectifier so as to convert the AC power generated by the second field winding 38 to DC power for supply to the battery 22. In this mode of operation, therefore, the first field winding 36 and second field winding 38 act as a transformer.

It will be appreciated from the above explanation that each of the first and second power electronics modules 24, 26 is a three-phase active rectifier inverter that can be controlled to function either as an inverter, to convert DC power to AC power, or as an active rectifier to convert AC power to DC power. As shown in Figure 2, each of the power electronic modules 24, 26 is controlled by a common power controller 37. Expressed another way, the first and second electronic modules 24,26 function as a dual-active bridge DC-DC converter in which the first and second field windings 36,38 of the electric machine 28 serve as the transformer of the device.

Each power electronics module 24, 26 has the same circuit configuration and includes a three phase bridge set comprising six high speed power switches such as IGBTs, although it should be noted that other switching means such as MOSFETs may be used. Low pass filters are included on the DC side of the power electronics modules 24, 26 in order to remove residual AC components on the converted DC voltage line. Such a configuration would be familiar to the skilled person.

As shown schematically in Figure 2, the electric machine 28 includes first and second stator field coils or 'windings' 36, 38. From the above explanation, it will be appreciated that in the charging mode of operation, the first field winding 36 and the second field winding 38 must be coupled electromagnetically in order to enable the energisation of the first field winding 36 to induce a charging waveform in the second field winding 38. The means by which the electromagnetic coupling between the first and second field windings 36, 38 operates is not central to the invention, and so is not described here in detail.

In principle, electromagnetic coupling between the first and second field windings 36, 38 will occur provided that they are situated in sufficiently close proximity to one another, whilst being electrically isolated from one another. This could entail a side-by-side arrangement, for example, or the windings 36, 38 could be wound one on top of the other in concentric relation, provided that in either case the windings 36, 38 are separated by insulating material or by an air gap.

Regardless of the particular winding topology adopted, control of the above described apparatus during charge mode poses a challenge. As noted above, prior art arrangements rely on rotation of the rotor to effect charging. However, the above described apparatus makes use of magnetic coupling between the first and second field windings 36, 38 to achieve charging. Therefore, there is no need for the rotor to move during charging, and indeed it is desirable to prevent rotor movement to avoid the associated noise and vibration. However, it will be appreciated that, under normal circumstances, an input waveform to the first field winding 36 will tend to cause movement of the rotor.

In view of this, embodiments of the invention implement a field-oriented current space vector method to control the electric machine 28 during charging in a manner that avoids rotor movement. While field-oriented current space vector control methods will be familiar to the skilled reader, an overview of the underlying principles is provided here in order to place the invention into context.

It should first be noted that individual magnetic fields generated by each of the permanent magnets carried on the rotor define respective rotor flux vectors each lying at an angle relative to an arbitrary fixed point on the stator, referred to hereafter as the rotor flux angles. The rotor flux vectors rotate with the rotor, resulting in varying rotor flux angles.

Turning now to the stator, the first and second field windings 36, 38 are each installed on the stator so as to form respective sets of individual coils, each coil being arranged to emulate the magnetic behaviour of a permanent magnet when an electric current is applied. When a three-phase current is applied to the first and second field windings 36, 38, the individual coils of each winding 36, 38 can be considered to be divided into groups of three neighbouring coils, one from each phase, and with each group having the same three-phase electric current profile as the other groups at any given time.

The differing currents flowing through each coil in a group generate three corresponding magnetic fields, which combine to produce an overall flux field. The effect of the combined flux can be represented by resolving the currents to determine a current vector.

The flux associated with each current vector couples to the nearest rotor flux vector to produce a force which exerts a torque on the rotor. The torque is maximised when the current vector lies at 90° to the rotor flux to which it couples, whereas no torque is produced if the current vector is aligned with the rotor flux. Therefore, the torque applied to the rotor can be adjusted by controlling the current in the first and second field windings 36, 38 so as to provide a desired angle between the current vector and the rotor flux. Typically, a motor will be controlled to produce a maximum torque output.

Although the current vector is defined by three physical currents, it will be appreciated that a vector can be resolved into orthogonal components. Therefore, to reduce the number of control variables, a first step in field-oriented current space vector control is to convert the current vector into two components, effectively transforming the physical three-phase current into an equivalent two-phase current. This step is typically performed using a 'Forward Clark Transformation', and the two phases are represented by an 'α-component' and a 'β-component'.

As noted above, the rotor flux varies with rotation of the rotor. As the rotor flux angle changes, so too does the strength of coupling between the rotor flux and the flux produced around the field windings 36, 38 as represented by the α and β component values. Noting that the rotor carries permanent magnets, while the magnetic field produced by the field windings 36, 38 can be controlled, it makes sense to use the rotor as a reference frame for measuring the strength of coupling. From the perspective of a fixed point on the rotor, the rotor flux is constant while the current vector appears to vary. This can be modelled as varying of the α and β component values with respect to the rotor flux. For a constant rotor speed, the component values vary sinusoidally.

As the objective in this type of motor control is ultimately to control the force exerted on the rotor, which is a function of the current vector with respect to the rotor, an additional transformation is applied to map the two-phase α and β component values to a coordinate system that uses the rotor as a reference frame.

It is noted that there is typically a desire for constant torque on the rotor to avoid torque ripple, which entails a substantially constant current vector using the rotor as a reference frame. In this situation, the second transformation yields a pair of DC current values. This is advantageous in conventional motor control, as two constant values can be controlled more easily than three alternating current values.

In any event, referencing the control to the rotor de-sensitises the control to the frequency of the alternating current; if the physical three-phase current were to be controlled directly, increasing current frequency would dictate increasingly powerful, and therefore costly, control components. Implementing field-oriented current space vector control enables accurate control with relatively basic components.

The transformation that is applied is known as a 'Forward Park Transformation', or 'dqo transformation' and the result is a vector associated with a reference frame that rotates with the rotor flux, the vector being defined by two orthogonal components: a d-axis (direct) component (or 'd-axis current'), which governs flux linkage; and a torque-forming q-axis (quadrature) component (or 'q-axis current').

It is noted that some variations of the Park Transformation enable direct conversion of the original current values into d-axis current and q-axis current components.

In operation, feedback loop control is applied to the d-axis current and the q-axis current in order to produce a three-phase waveform in the first and second field windings 36, 38 that will exert a desired torque on the rotor. To do this, an instantaneous three-phase current flowing through the windings 36, 38 is measured and converted into effective d-axis current and q-axis current values. These values are compared against desired values to derive an error signal, which is amplified to produce a control signal which is then returned to the original three-phase format using reverse transformations. The input voltages are then adjusted accordingly by the control signal, to alter the three-phase current in the first and second field windings 36, 38, thereby controlling the torque applied to the rotor. This technique is commonly referred to as 'd-q control', 'vector control' or 'field oriented control'.

It is noted that the control adjusts the input voltage frequency in proportion with the desired rotational speed of the rotor. By way of example, an electric machine including eight pole pairs operating at 10000rpm will typically apply an input voltage frequency of around 670Hz. The input voltage is typically implemented using a pulse-width modulated (PWM) carrier signal with a frequency significantly higher than the control frequency, for example 10kHz or higher.

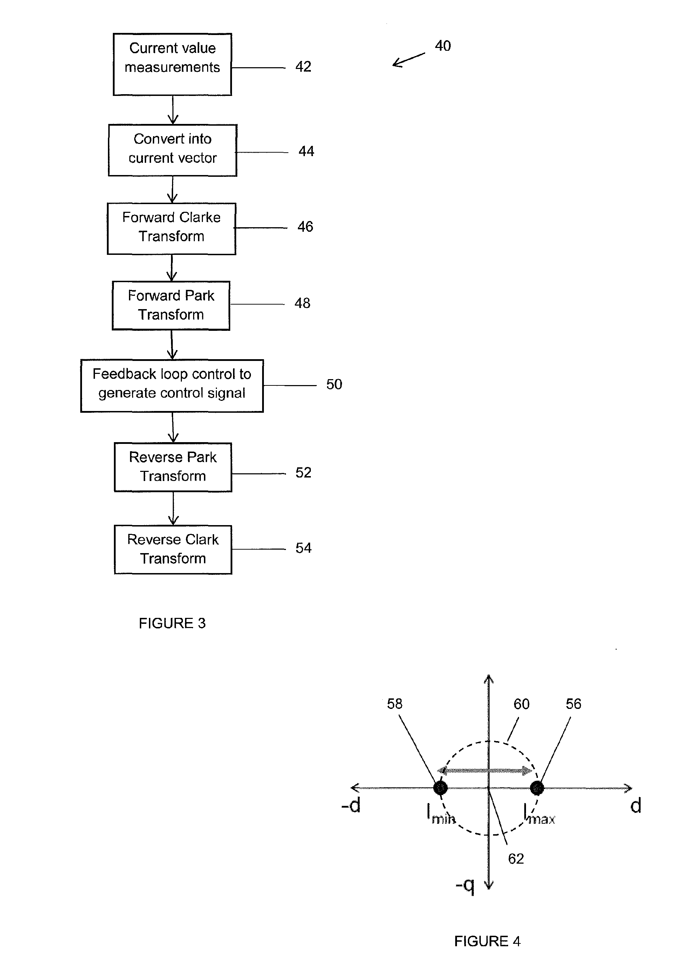

The steps involved in the control method described above are illustrated in Figure 3 by way of a flow diagram. As shown, a typical control process 40 involves first obtaining at step 42 instantaneous current values, which for a three-phase system comprises three separate values, and also positional information regarding the angular position of the rotor which may be derived from a suitable rotor position sensor. Next, these three values are converted at step 44 into a current vector as described above. This current vector is then resolved into orthogonal components (α, β components) using a Forward Clarke Transformation at step 46. A Forward Park Transformation is then applied at step 48 to convert the α and β component values into a d-component and a q-component associated with a reference frame that rotates with the rotor.

Feedback loop control is then applied at step 50 to the d and q component values to derive a control signal composed of a d-axis current control value and a q- axis current control value. The control signal is then converted back into equivalent α and β component values using a Reverse Park Transformation at step 52, and then into a current vector defining three control voltages using a Reverse Clarke Transformation at step 54, which is then used to control the input signal.

The above process 40 is iterated to provide continuous control. The frequency at which the process 40 iterates is typically at least 10 times the frequency of the carrier signal. Therefore, for a carrier signal frequency of 10kHz, the control process would iterate at 100KHz or above. Modern controllers may be able to run the process at much higher frequencies, for example 1GHz or higher, which is desirable as increasing frequency tends to improve the resolution of the control.

In conventional d-q motor control, it is usually desirable to maximise the torque that is applied to the rotor. This entails producing a current vector that is orthogonal to the rotor flux. As noted above, it is also generally desirable to produce a current vector that is constant from the rotor's perspective to avoid unwanted torque ripple. To achieve these objectives, in d-q control the torque-forming q-axis current is typically controlled at a constant value, while the d- axis current is typically set to zero.

However, an opportunity has been identified to make use of the d-q control technique to avoid undesired movement of the rotor of the above described integrated charger motor arrangement while in charging mode.

D-q control is implemented in the first power electronics module 24 as it creates the input waveform for the first field winding 36. In contrast with the conventional approach, in embodiments of the present invention the d-q control is tailored to prevent rotation of the rotor. Two different basic approaches have been identified for achieving this, realised in two main embodiments of the invention. Both embodiments reverse the conventional approach of providing a constant current vector with respect to the rotor for steady rotation, and instead vary the d-axis current and q-axis current components in a manner that minimises rotor torque output, thereby preventing significant movement of the rotor.

In a first embodiment, the torque forming q-axis current is set to zero, thereby ensuring that no torque is produced in the electric machine 28. A graphical representation of this approach is provided in Figure 4. To ensure that the magnetic field in the stator does not rotate and cause torque ripple, which may occur, for example, if the rotor is not aligned with the windings, the d- axis current is switched between an Iₘₐₓ value 56 and an Iₘᵢₙ value 58, for example using a square wave profile.

Calculation of the Iₘₐₓ and Iₘᵢₙ values 56, 58 is dictated by the voltage that is supplied to the vehicle battery, and the desired power. Using this information, the required current is determined from the well-known equation: power = voltage x current.

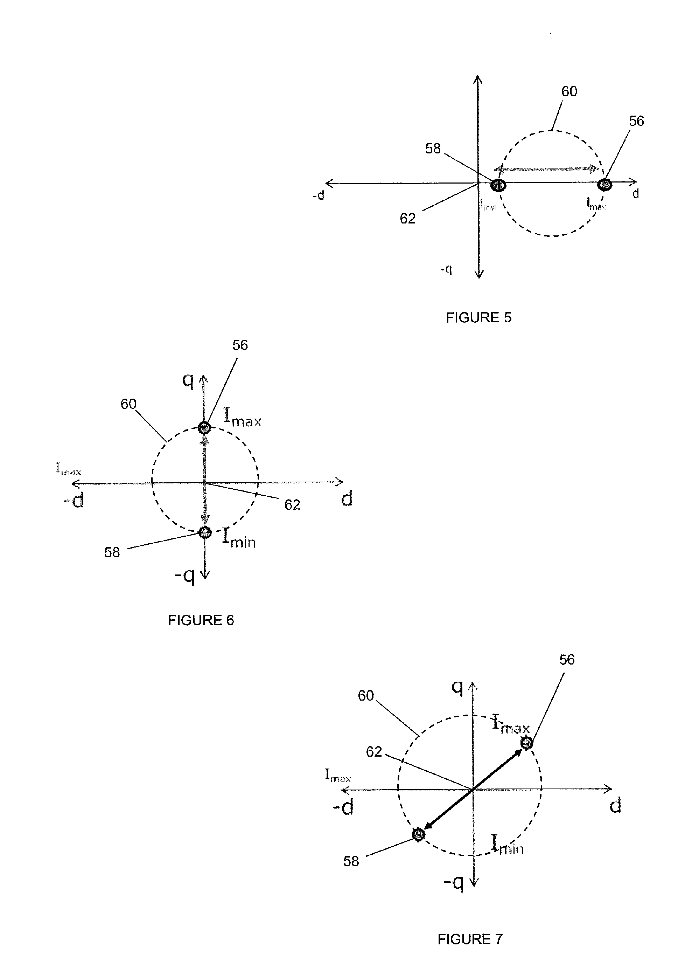

As shown in Figure 5, the centre point about which the d-axis current is varied may be offset from zero to a constant, positive value. This approach may help avoid de-magnetisation of the rotor magnets, particularly if the control is configured such that the d-axis current remains positive at all times as it switches between the Iₘₐₓ and Iₘᵢₙ values 56,58.

In the second embodiment, which is illustrated in Figure 6, the Iₘₐₓ and Iₘᵢₙ values 56, 58 are selected such that the d-axis current is set to zero, and the q-axis current is switched according to a square wave profile, centred on zero. As in the first embodiment, varying the q-axis current prevents a rotating magnetic field from forming. As q-axis current causes torque, high frequency oscillation is required in this embodiment to prevent vibration of the rotor. Higher frequency tends to increase losses, including iron loss in the electric machine and switching losses in the first power electronic module 24. Therefore, the frequency is optimised so as to strike a balance between losses and preventing vibration. A frequency of between 5kHz and 15kHz has been found to work well in one specific implementation, although this will vary depending on the physical characteristics of the components of the system.

A benefit with this second approach is that, due to the way electric machines of this type are typically designed, using q-axis current results in higher inductance between the first and second field windings 36, 38 relative to when the q-axis current is held at zero. This ensures improved efficiency of energy transfer between the first and second windings 36, 38. However, due to the fact that q-axis current creates torque on the rotor, this benefit may be offset to some extent by introduction of high-frequency vibration of the rotor.

In either of the above embodiments, the induced waveform in the second field winding 38 is substantially identical in form to the input waveform in the first field winding 36, albeit with reduced amplitude. Consequently, the induced waveform also does not act to move the rotor.

A major advantage of both of the above embodiments is that, as d-q control is a standard technique, the method can be implemented using standard components. Indeed, when the electric machine 28 operates in drive mode it is likely that d-q control will be implemented in the first power electronics module 24 in a conventional manner. Therefore, no additional components are required to implement this method, thereby minimising the cost and complexity of the system.

In order to strike a balance between inductance and vibration, a third embodiment of the invention is envisaged in which the two embodiments described above are blended. In this embodiment, the Iₘₐₓ value 56 is selected such that both the d-axis current and the q-axis current are positive and non-zero, and the Iₘᵢₙ value 58 defines negative, non-zero d-axis current and q-axis current components. This approach is depicted in Figure 7. In the pictured example, the current space vector is oriented at approximately 45° to the d-axis, although this angle can be varied according to the vibration and inductance requirements. For example, the angle can be altered by tuning the d-axis current and q-axis current components so as to define new Iₘₐₓ and Iₘᵢₙ values 56, 58.

While the embodiments of the invention shown in Figures 4 to 7 are presented as alternative approaches, they can be reconciled by considering each of them as fundamentally involving switching the current between two diametrically opposed vector points on a circle 60 drawn on the d-q reference coordinate system. In this way, a common inventive thread running through all of the embodiments of the invention can be seen.

The circle 60 may be centred on the origin 62, as in Figures 4 and 6, or the circle 60 may be offset from the origin 62, as in Figure 5. It is noted that the centre of the circle corresponds to a midpoint between the vector points defined by Iₘₐₓ and Iₘᵢₙ. Equally, while the above approaches describe particular blends of d-axis current and q-axis current, the blend can be continuously varied by altering the angle of the current vector relative to the d-axis. This can be represented as varying the angle relative to the d-axis of a theoretical line drawn between the two diametrically opposed current values on the circle.

For example, the approach shown in Figure 6 involving q-axis current only can be represented as setting the current vector angle to 90°, with the circle 60 centred at the origin 62. Based on this, all possible variations can be represented using three variables: the angle of the current vector; the location of the centre of the circle 60; and the diameter of the circle 60, which defines the magnitude of the current vector. These three variables in turn define the magnitudes of the d-axis current and the q-axis current in any scenario.

In view of this, it should be appreciated that each of Figures 4 to 7 illustrates a special case of the proposed d-q control implementation, whereas in reality the control method enables usage of any two diametrically opposed switching points defined by the Iₘₐₓ and Iₘᵢₙ values 56, 58, such that the magnitude and angle of the current vector are continuously variable within the bounds of the circle 60. Therefore, the exact positions of the switching points can be optimised to account for the varying physical characteristics of each electric machine, along with desired charging behaviour.

While the embodiments of the invention have been described with reference to the electric machine topology of Figures 1 and 2, this is for representative purposes only; it should be appreciated that the above described control method is not limited to use with the apparatus referred to, but could be applied to a wide range of integrated charging motor arrangements.

Furthermore, it will be appreciated by a person skilled in the art that the invention could be modified to take many alternative forms to that described herein, without departing from the scope of the appended claims.

## Claims

1. A method of controlling an electrical system for a grid-enabled vehicle, the system comprising:
a bi-directional DC energy source;
an electric machine including a rotor, a stator, a first winding and a second winding, wherein the stator carries the first winding;
a first control circuit connected to the first winding and including an input configured to be coupled to the grid; and
a second control circuit through which the second winding is connected to the bi-directional DC energy source;
wherein the method comprises:
coupling the first control circuit to the grid;
operating the first control circuit according to a field-oriented current space vector method so as to convert grid-supplied electrical energy into an alternating voltage waveform, comprising periodically switching a current vector in a d-q reference frame between diametrically opposed first and second vector points, the current vector being disposed at an angle relative to the d-axis to define a d-axis component value and a q-axis component value; and
charging the bi-directional DC energy source using an induced alternating voltage waveform in the second winding arising through magnetic coupling between the first and second windings.

2. The method of claim 1, comprising setting the current vector angle to 90° such that the current vector is parallel with the q-axis for both vector points.

3. The method of claim 1, comprising setting the current vector angle to 0° such that the current vector is parallel with the d-axis for both vector points.

4. The method of claim 1, comprising setting the current vector angle to a value between 0°and 90° such that both the d-axis component and the q-axis component are non-zero for both vector points.

5. The method of any preceding claim, wherein a midpoint defined between the first and second vector points coincides with the origin of the d-q reference frame.

6. The method of any one of claims 1 to 4, wherein a midpoint defined between the first and second vector points is offset from the origin of the d-q reference frame.

7. The method of claim 6, wherein the midpoint is centred on the d-axis.

8. The method of claim 6, wherein the midpoint is centred on the q-axis.

9. The method of any preceding claim, comprising switching the current vector between the first and second vector points according to a square-wave profile.

10. The method of claim 9, wherein the square wave has a frequency in the range of 5kHz to 15kHz.

11. The method of any preceding claim, wherein the current vector angle is determined such that the relative magnitudes of the d-axis component value and the q-axis component value provide a desired balance between rotor vibration and inductance between the first and second windings.

12. The method of any preceding claim, wherein the stator carries the second winding.

13. The method of claim 12, wherein the first and second windings are paired to form dual-layer windings.

14. The method of any preceding claim, wherein the first and second windings are multi-phase.

15. The method of any preceding claim, wherein the second control circuit is arranged to convert AC electrical signals supplied by the second winding into a DC input for the bi-directional DC energy source.

16. A control method substantially as described herein, with reference to Figures 2 to 7.
